# EUROPÄISCHE PATENTSCHRIFT

(11) **EP 1 026 338 B1**
(45) Veröffentlichungstag und Bekanntmachung des Hinweises auf die Patenterteilung: **11.05.2005**
(21) Anmeldenummer: 00101906.6
(22) Anmeldetag: 01.02.2000
(51) Int. Cl.: E04D 13/03, E04B 7/08

(54) **Gebogene Verglasung**
Curved glazing
Vitrage courbe

(30) Priorität: 02.02.1999 DE 19903955
(43) Veröffentlichungstag der Anmeldung: 09.08.2000
(73) Patentinhaber: Maier & Co., 89520 Heidenheim (DE)
(72) Erfinder: Maier, Klaus, 89520 Heidenheim (DE)
(74) Vertreter: Lorenz, Werner, Dr.-Ing.

(56) Entgegenhaltungen:
- WO-A-98/01649
- DE-A- 2 123 909
- FR-A- 2 540 917
- US-A- 4 860 504
- "VAN VLAKKE GLASPANELEN TOT GEBOGEN LICHTSTRAAT" ARCHITECTUUR & BOUWEN,NL,STAM TIJDSCHRIFTEN B.V. RIJSWIJK, Bd. 12, Nr. 4, 1. April 1997 (1997-04-01), Seiten 28-29, XP000682417 ISSN: 0169-4421

## Beschreibung

Die Erfindung betrifft eine vorgefertigte Baueinheit einer gebogenen Verglasung für Überkopfverglasungen, Dekoration, Schallschutz, energietechnische Anwendungen oder dergleichen.

Aus der deutschen Offenlegungsschrift 2 105 503 sind gebogene Verglasungen bekannt. Bei einem Gewächshaus besteht der Dachfirst aus gebogenen, gehärteten Glasscheiben. Die Glasscheiben sind bezüglich ihrer Bogenform thermisch fixiert. Der Einbau derartiger, thermisch fixierter Bogengläser ist sorgfältig durchzuführen. Generell darf derartiges Bogenglas keinerlei Druck- oder Zugspannungen ausgesetzt werden; es muß deshalb allseitig spannungsfrei, ohne Druckpunkte, im Glasfalz stehen. Bei Überkopfverglasungen ist zu gewährleisten, daß das Glasgewicht gleichmäßig auf der Falzauflage verteilt aufliegt.

Die EP 0 282 469 A1 beschreibt ein gewölbtes Glasdach mit einem Gerippe und einer Folge von gebogenen verglasten Feldern. Dabei besteht jedes Feld aus zwei oder mehr nebeneinander liegenden gewölbten Glaspanelen, von denen jedes dieser Panele eine thermisch vorgespannte rechteckige Glasscheibe, die ursprünglich eben war und kalt gewölbt worden ist, und einen gewölbten Rahmen zur Aufrechterhaltung der Krümmung der Glasscheibe unter Vorspannung aufweist. Der Rahmen ist durch den Zusammenbau von entlang der geraden Seite der Glasscheibe angeordneten geraden Rahmenprofilen und von entlang der gekrümmten Seite der Glasscheibe angeordneten gewölbten Rahmenprofilen gebildet. Die Ränder der Glasscheibe sind dabei in eine Nut eingesetzt, die entlang der Innenseite des Rahmens vorgesehen ist. Als Unterkonstruktion für jeweils zwei aufeinanderfolgende Felder ist ein Untergurt vorgesehen, welcher die unteren Ecken der gewölbten Glaspanele verbindet.

Einen dazu vergleichbaren Aufbau zeigt auch die EP 0 282 468 A1, in welcher eine Vorrichtung beschrieben ist, welche es erlaubt, eine Scheibe entsprechend zu krümmen und ihre Krümmung durch entsprechende seitliche Beschläge an allen Seitenkanten der Scheibe aufrecht zu erhalten.

Die beiden genannten Schriften zeigen dabei jeweils Aufbauten, die eine entsprechende stabile Unterkonstruktion erforderlich machen, um die über die gekrümmten Rahmenelemente auf Biegung gehaltenen Glasscheiben aufzunehmen. Daher und auch aufgrund des seitlich auf die Glasscheiben aufgeschobenen Rahmenelements, womit der größte Teil der Seitenkanten der Glasscheiben mit einem metallischen Rahmen bedeckt ist, ergeben sich optische Einschränkungen.

Insbesondere in der US 4,848,048, welche mit den oben genannten Anmeldungen eine Patentfamilie bildet, ist aufgezeigt, daß sehr komplexe und aufwendige Rahmenkonstruktionen für den Einsatz derartiger gebogener Verglasungen, speziell im Bereich von Gewächshäusern, erforderlich sind.

Der Erfindung liegt die Aufgabe zugrunde, ein Bogenglas vorzuschlagen, das kostengünstig herstellbar und einfach montierbar ist.

Die Erfindung löst die Aufgabe mit den im Anspruch 1 genannten Merkmalen.

Erfindungsgemäß wird eine vorgefertigte Baueinheit aus einer mechanisch gebogenen Scheibe aus Flachglas gefertigt. Diese gebogene Scheibe wird durch wenigstens einen Zuganker in ihrer Biegung fixiert.

Die Baueinheit ist einfach herstellbar. Die Glasplatte wird entsprechend dem Bogenradius zwischen zwei Auflagern soweit gebogen, bis der gewünschte Bogenradius bzw. die Bogenform erreicht ist. Dann erfolgt die Fixierung durch den bzw. die Zuganker. Damit liegt ein einseitig gewölbtes Bogenglas vor, das als Baueinheit - bestehend aus einem Bogenglas und den Zugankern - leicht zu handhaben, zu transportieren und einzubauen ist.

Eine derartige Baueinheit ist wesentlich kostengünstiger als das thermisch fixierte Bogenglas und zwar nicht nur bezüglich seiner Herstellung, sondern auch bei der Montage.

Die Vorteile der erfindungsgemäßen Baueinheit sind:

Die Herstellung der Baueinheit ist einfach. Aufgrund einer einfachen Vorrichtung kann bei Raumtemperatur die Biegung der Scheibe bewirkt und durch wenige und einfache Beschlagteile, nämlich die Zuganker, in ihrer Form fixiert werden.

Die Baueinheit bleibt bei der Anwendung, z.B. Gewächshaus, Fassaden, in seiner Struktur erhalten, das heißt, es müssen keine Löcher oder Öffnungen in der Baueinheit vorhanden sein, um die Baueinheit, bestehend aus Scheibe und Zuganker zu befestigen. Vielmehr kann die Befestigung der Baueinheit über die Zuganker erfolgen. Damit ist auch das Auswechseln einer der Baueinheiten, beispielsweise aufgrund einer Beschädigung, rasch, einfach und kostengünstig durchzuführen.

Die Glasdicke der Scheibe der Baueinheit ist bei der Anwendung als Überkopfverglasung aufgrund seiner statischen Eigenschaften erheblich dünner als ein herkömmlicher Glaskörper. Dadurch bleibt das Gewicht eines, aus den Baueinheiten bestehenden oder damit bestückten Baukörpers klein, was sich vorteilhaft auf die Statik des Baukörpers und die Kosten der Verglasung auswirkt.

Die Erfindung ist universell einsetzbar, beispielsweise als gestalterisches Element in der Architektur und in der Kunst, sowie in Gebrauchsbauten, wie Wintergärten, Glashäuser, Gewächshäuser, Wartehallen, Vordächer für Häuser, sonstige Bauten, wie Iglu und großräumige, weitgespannte oder langgezogene Überdachungen für Fußgängerzonen, Einkaufszentren, Hangars, Sportarenen.

Die erfindungsgemäße Baueinheit, welche in einer vorteilhaften Weiterbildung aus Sicherheitsglas bestehen kann, weist aufgrund der mechanischen Verformung erhöhte Spannungen auf. Durch die mechanische Verformung ist die Baueinheit auf seiner Bogenseite wesentlich höher zu belasten, beispielsweise durch Schneelast oder Winddruck, als eine herkömmliche Überkopfverglasung. Statische oder wechselnde Belastungen an der Baueinheit werden durch die Zuganker aufgefangen.

Gegenüber dem thermisch fixierten Bogenglas kommt das erfindungsgemäße Bogenglas mit wesentlich geringeren Glasdicken aus, so daß das Gewicht entsprechend wesentlich geringer ist.

Gegenüber Gläsern, welche über seitliche Rahmenelemente in einer gebogenen Form fixiert werden, weist die erfindungsgemäße Baueinheit den Vorteil auf, daß durch die Konstruktion aus dem wenigstens einen Zuganker und dem Glas eine optisch sehr leichte Konstruktion entsteht, die sich insbesondere für großflächige Überdachungen oder dergleichen eignet, da die Baueinheit ausschließlich aus dem gebogenen Glas und den Zugankern besteht. Weitere sowohl optisch störende als auch schwere Rahmenteile sind bei der erfindungsgemäßen Baueinheit nicht erforderlich.

Die Baueinheit kann damit leicht transportiert, angehoben, montiert, aufgehängt oder dergleichen werden, wobei die an sich bekannten und herkömmlichen Aufhängungselemente oder Unterkonstruktionen entsprechend einfach und leicht ausgeführt werden können.

Bei einem angenommenen Bruch der Scheibe ist das Verhalten von der Glasart abhängig. Daher erschließen sich weitere Vorteile in einer alternativen Ausführungsform der Erfindung durch den Einsatz von Verbundsicherheitsglas (VSG).

Bei herkömmlichen Scheiben aus Einscheibensicherheitsglas (ESG) wird bei einem angenommenen Bruch das Glas in kleinen Teilen herunterfallen. Verbundsicherheitsglas, welches aus zwei Einscheibensicherheitsgläsern besteht, wird dagegen wie ein Teppich auf den Zugankern liegen, sofern beide Scheiben zerstört wurden. Sofern nur eine der beiden Scheiben zerstört wurde, ergibt sich lediglich eine optische Beeinträchtigung der erfindungsgemäßen Baueinheit.

Ein Verbundsicherheitsglas aus zwei Scheiben teilvorgespannten Sicherheitsglas (TVG) wird je nach Zerstörung seine Form beibehalten bzw. ebenfalls wie ein Teppich auf den genannten Zugankern zu liegen kommen.

Eine weitere Möglichkeit bei einem angenommenen Bruch der Scheibe das Runterfallen von großen Glassplittern zu vermeiden, ergibt sich durch den besonders vorteilhaften Einsatz einer Splitterschutzfolie in einer sehr günstigen Ausführungsform der Erfindung. Diese Splitterschutzfolie wird dabei auf das herkömmliche Einscheibensicherheitsglas oder das teilvorgespannte Sicherheitsglas aufgebracht und hält beim Bruch die Glassplitter, wie bei einem Verbundsicherheitsglas, zusammen. Dadurch, daß lediglich eine Scheibe erforderlich ist, kann jedoch das Gewicht der gesamten Baueinheit bei dieser Ausführungsform geringer gehalten werden als dies beim Einsatz von Verbundsicherheitsglas der Fall wäre.

Eine weitere besonders vorteilhafte Ausgestaltung der gebogenen Verglasung sieht vor, daß die Scheibe aus wenigstens zwei Glasschichten besteht, wobei zwischen den Glasschichten Solarzellen angeordnet sind.

Damit ist man in der Lage, ein gebogenes Photovoltaik(PV)-Modul zu schaffen. Für dieses gebogene PV-Modul ergeben sich dabei, neben den Vorteilen aus der gebogenen Verglasung an sich, zwei weitere Vorteile. Der Einsatz der Solarzellen kann problemlos gegebenenfalls auch nachträglich in eine bestehende Konstruktion aus derartigen gebogenen Baueinheiten durch einen einfachen Austausch eingebaut werden. Die Baueinheiten können damit elektrische Energie liefern und sorgen außerdem für eine Beschattung des hinter ihnen liegenden Bereichs. Beim Einsatz der Baueinheiten für eine Überdachung eines Stadions oder eines Platzes kann so das Stadion oder der Platz durch die Überdachung beschattet werden und gleichzeitig wird elektrische Energie gewonnen. Als Solarzellen bieten sich dabei verschiedenartige Zellen an, wobei hier sicherlich Dünnschichtzellen aus amorphem Silizium zu favorisieren sind.

Eine weitere sehr vorteilhafte Ausgestaltung der Erfindung sieht vor, daß die dem Zuganker zugewandte Seite der Scheibe reflektierend ausgebildet ist.

Auch hier liegt der Einsatzzweck der gebogenen Baueinheit im Bereich der solaren Energietechnik. Die Baueinheit kann dazu mit ihrer in Zugankern zugewandten reflektierenden Seite in Richtung der einfallenden Sonnenstrahlen ausgerichtet werden. Je nach Biegeradius werden die einfallenden Sonnenstrahlen reflektiert und treffen sich in einem Brennpunkt bzw. einer parallel zu den kurzen Seitenkanten - beim Einsatz einer rechteckigen Scheibe - verlaufenden Brennlinie. Wird in den Bereich dieser Brennlinie nun ein Rohrelement oder dergleichen eingebracht, in welchem eine Wärmeträgerflüssigkeit, beispielsweise ein Thermoöl, strömt, so wird dieses Thermoöl durch die einfallende Sonnenstrahlung erwärmt und sein thermischer Energieinhalt kann für energietechnische Anwendungen genutzt werden.

Für diese an sich bekannte Kraftwerksart mußten bisher thermisch gebogene Spiegelelemente eingesetzt werden, was die Herstellung und die Kosten einer solchen Kraftwerksanlage vergleichsweise teuer macht. Mit der erfindungsgemäßen Baueinheit aus dem gebogenen Glas, bei der dann die den Zugankern zugewandte Seite der Scheibe reflektierend ausgebildet ist, kann hier ein kostengünstiger und einfacher Aufbau erreicht werden. Das Rohr für die Wärmeträgerflüssigkeit kann dabei einfach an den Zugankern befestigt werden, wobei bei der Vorfertigung der Baueinheit lediglich die Form der Biegung an den jeweiligen Zweck angepaßt werden muß.

Weitere vorteilhafte Ausgestaltungen der Erfindung ergeben sich aus den Unteransprüchen und den anhand der prinzipmäßigen Zeichnung nachfolgend dargestellten Ausführungsbeispielen.

Es zeigt:
- Fig. 1: eine Vorrichtung zur Herstellung einer erfindungsgemäßen Baueinheit;
- Fig. 2: die Baueinheit in einer Seitenansicht;
- Fig. 3: die Baueinheit nach Fig. 2 in einer Draufsicht;
- Fig. 4: ein Band von aneinandergereihten Baueinheiten gemäß Fig. 2;
- Fig. 5: eine Konstruktion in perspektivischer Ansicht, bestehend aus einer Vielzahl von Baueinheiten;
- Fig. 6: eine Seitenansicht eines Befestigungselements in einem prinzipmäßigen Teilschnitt;
- Fig. 7: eine Draufsicht auf das Befestigungselement gemäß Pfeil VII in Fig. 6;
- Fig. 8: eine alternative Ausführungsform eines Befestigungselements;
- Fig. 9: eine weitere alternative Ausführungsform eines Befestigungselements;
- Fig. 10: eine alternative Ausführungsform der Baueinheit als Photovoltaik-Modul; und
- Fig. 11: der Einsatz einer Baueinheit für eine solar thermische Anwendung.

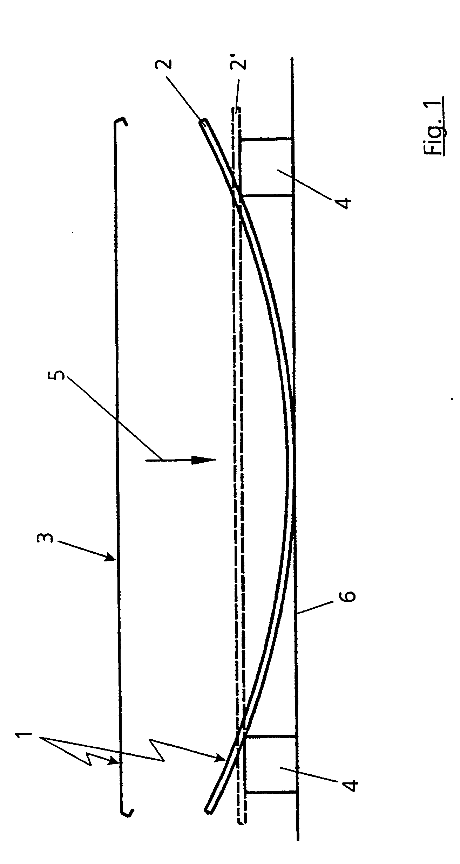

In Fig. 1 ist die Herstellung einer Baueinheit 1 aus einer gebogenen Scheibe 2 und einem Zuganker 3 prinzipmäßig dargestellt. Ausgehend von einer planen Scheibe 2', beispielsweise aus Einscheibensicherheitsglas mit einer Dicke von 6 mm, welche zwischen zwei Auflagern 4 angeordnet ist, wird die plane Scheibe 2' durch eine Krafteinwirkung gemäß dem Pfeil V bis zu einem Anschlag 6 durchgebogen. Über den Zuganker 3, welcher noch in seinem unmontierten Zustand prinzipmäßig angedeutet ist, wird dann die Durchbiegung der Scheibe 2 fixiert.

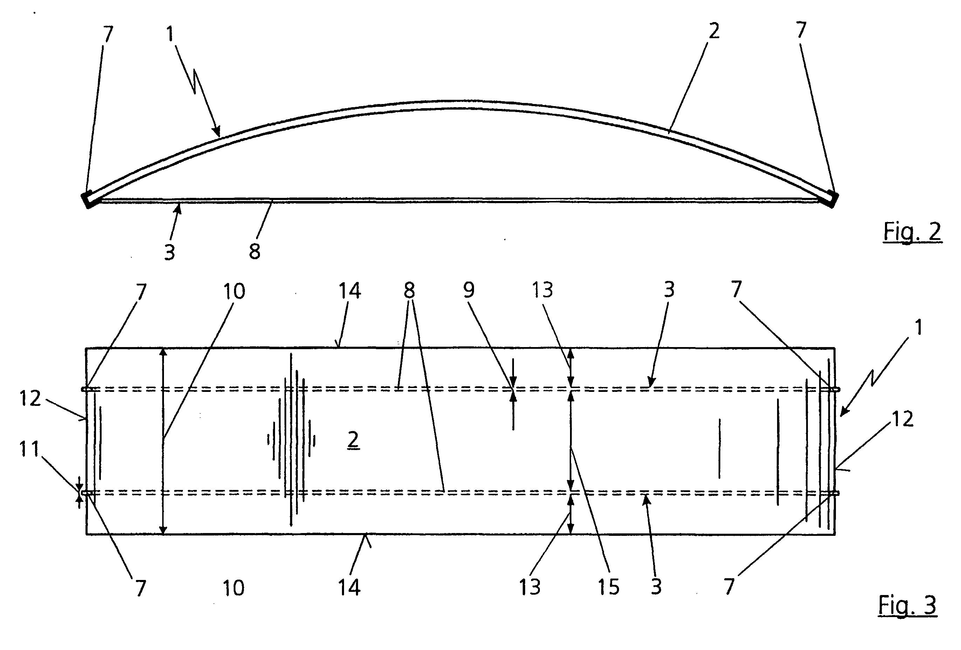

In Fig. 2 und Fig. 3 ist die Baueinheit 1 dann nochmals in einer Seitenansicht und einer Draufsicht erkennbar. Die gebogene Scheibe 2 wird dabei von dem Zuganker 3 in ihrer gebogenen Form gehalten. Wie in der Draufsicht gemäß Fig. 3 deutlicher zu erkennen ist, sind bei dem hier dargestellten Ausführungsbeispiel mit einer rechteckigen Projektionsfläche der Scheibe 2 zwei der Zuganker 3 eingesetzt. Jeder der Zuganker 3 besteht dabei aus jeweils zwei Befestigungselementen 7 und einem Zugmittel 8. Als Zugmittel 8 können dabei verschiedenartige Bauelemente, wie Rohre, Stangen, Seile, Ketten oder dergleichen, eingesetzt werden. Die Breite 9 der Zugmittel 8 entspricht dabei lediglich einem Bruchteil der Breite 10 der Scheibe 2. Vergleichbares gilt für die Breite 11 der Befestigungselemente 7, welche auch lediglich einem Bruchteil der Breite 10 der Scheibe 2 entspricht.

Die Befestigungselemente 7 der Zuganker 3 greifen dabei jeweils an den kürzeren Seitenkanten 12 der Scheibe 2 an, wobei der randseitige Abstand 13 der Zuganker 3 von den jeweils längeren Seitenkanten 15 der Scheibe 2 in etwa der Hälfte eines Abstands 15 zwischen den beiden Zugankern 3 entspricht.

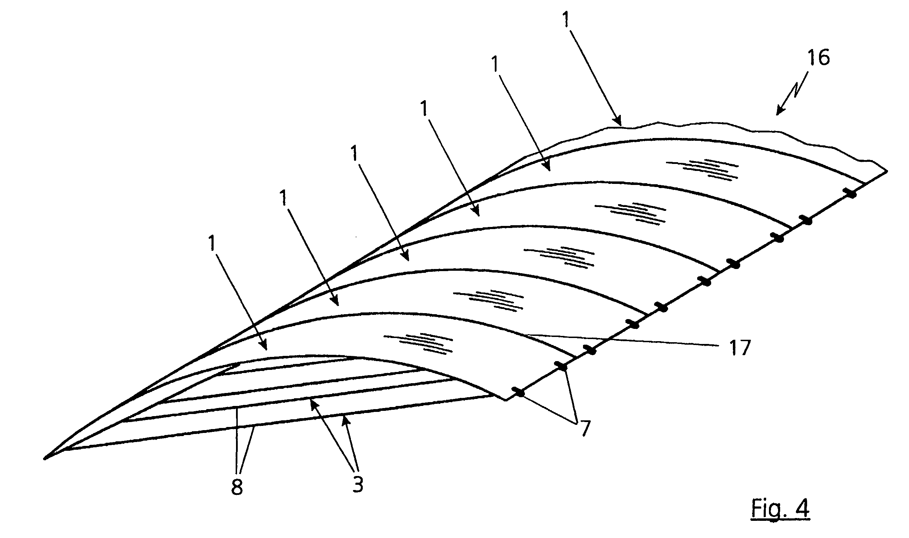

In Fig. 4 ist ein endloses Band 16 aus aneinandergereihten Baueinheiten 1 erkennbar. Fugen 17 zwischen den Baueinheiten 1 können dabei mit einem hier nicht näher dargestellten Dichtprofil oder dergleichen abgedichtet werden, falls dies aufgrund des Einsatzzweckes des Bandes 16 erforderlich sein sollte.

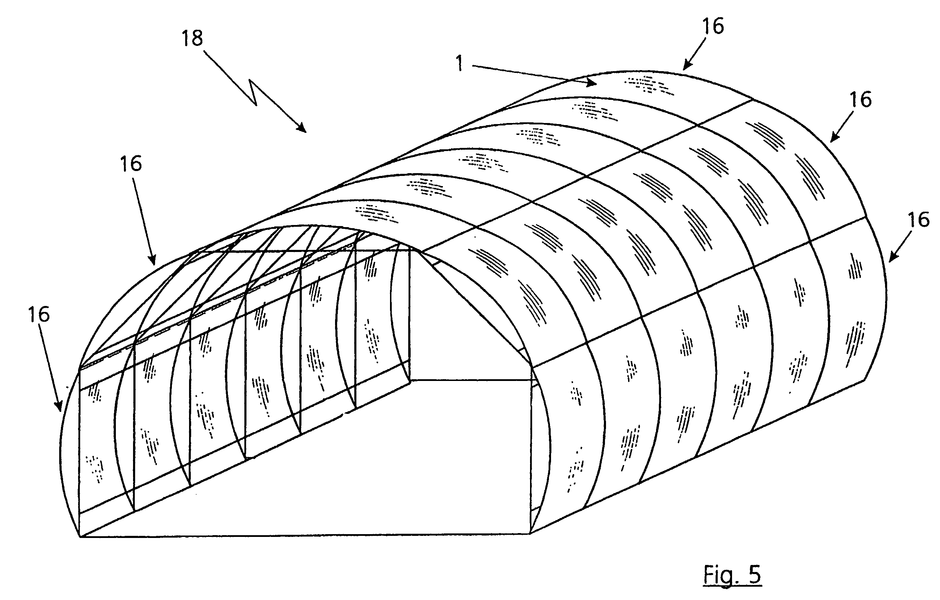

In Fig. 5 ist eine Konstruktion 18 dargestellt, bei der mehrere der Bänder 16 zu einem Tunnel bzw. gebäudeartigen Überdachung zusammengefügt sind.

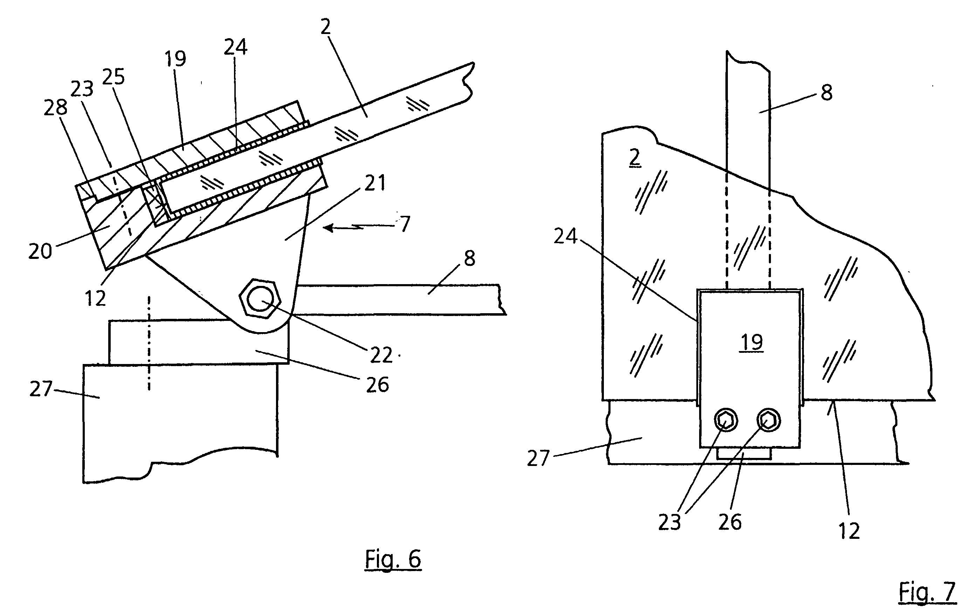

Fig. 6 zeigt nun die prinzipmäßige Schnittdarstellung eines der Befestigungselemente 7 des Zugankers 3 mit einem teilweise dargestellten Zugmittel 8. Das Befestigungselement 7, welches hier als Klemmelement 7 ausgebildet ist, ist dabei zweiteilig ausgeführt und erlaubt es so, die Scheibe 2 zwischen zwei Backen 19, 20 aufzunehmen. Der untere Backen 20 ist dabei an ein Halteelement 21 angebracht, beispielsweise angeschweißt, an dem das Zugmittel 8 mittels eines Befestigungsmittels 22, beispielsweise einer Schraube, angebracht ist.

Bei der in Fig. 1 prinzipmäßig dargestellten Herstellung der Baueinheit 1 wird das Befestigungselement 7 mit seinem unteren Backen 20 auf die gebogene Scheibe 2 aufgelegt und durch ein Befestigen des zweiten Bakkens 19 über entsprechende Befestigungsmittel 23, die in Fig. 6 nur prinzipmäßig angedeutet sind, geklemmt.

Dieses Aufklemmen des Befestigungselements 7 kann dabei auch an der noch planen Scheibe 2' vor der Durchbiegung erfolgen, so daß nach dem Durchbiegen der Scheibe 2' auf den Anschlag 6 lediglich das Zugmittel 8 über das Befestigungsmittel 22 in die bereits auf die Scheibe 2 aufgeklemmten Befestigungselemente 7 montiert werden muß.

Um eine Beschädigung der Scheibe 2 durch die Backen 19, 20 des Befestigungselements 7 zu vermeiden, wird zwischen die beiden Backen 19, 20 und die Scheibe 2 eine Zwischenschicht 24 eingelegt. Diese Zwischenschicht 24 sollte dabei aus einem Material bestehen, welches eine kleinere Härte als das Material der Bakken 19, 20 aufweist, in seiner Härte jedoch ausreichend ist, die Scheibe 2 sicher zwischen den beiden Backen 19, 20 zu halten. Zusätzlich zu der Zwischenschicht 24 ist im Bereich der Seitenkante 12 der Scheibe 2 ein elastisches Element 25, beispielsweise ein Gummiblock, angeordnet, um die gegebenenfalls auf die Seitenkante 12 der Scheibe 2 wirkenden Druckkräfte auszugleichen und über eine möglichst große Fläche gleichmäßig zu verteilen.

Weiterhin ist in Fig. 6 eine Aufnahmeeinrichtung 26 erkennbar, welche ebenfalls fest mit dem Befestigungselement 7 verbunden ist. Über diese Aufnahmeeinrichtung 26 läßt sich die Baueinheit 1 über den Zuganker 3 auf einer entsprechenden Unterkonstruktion 27 sicher befestigen.

Fig. 7 zeigt nun eine Draufsicht gemäß dem Pfeil VII in Fig. 6. Dabei ist erkennbar, daß es sich bei den Befestigungsmitteln 22 im dargestellten Ausführungsbeispiel um zwei Schrauben 23 handelt, welche den grob L-förmigen Backen 20 mit dem darauf aufliegenden plattenförmigen Backen 19 verbindet. Um eine sichere Kontaktfläche zwischen den beiden Backen 19, 20 zu bekommen, ist darüber hinaus, wie dies wiederum in Fig. 6 zu erkennen ist, eine Paßkante 28 eingearbeitet, welche insbesondere die Montage der beiden Backen 19, 20 zueinander erleichtert.

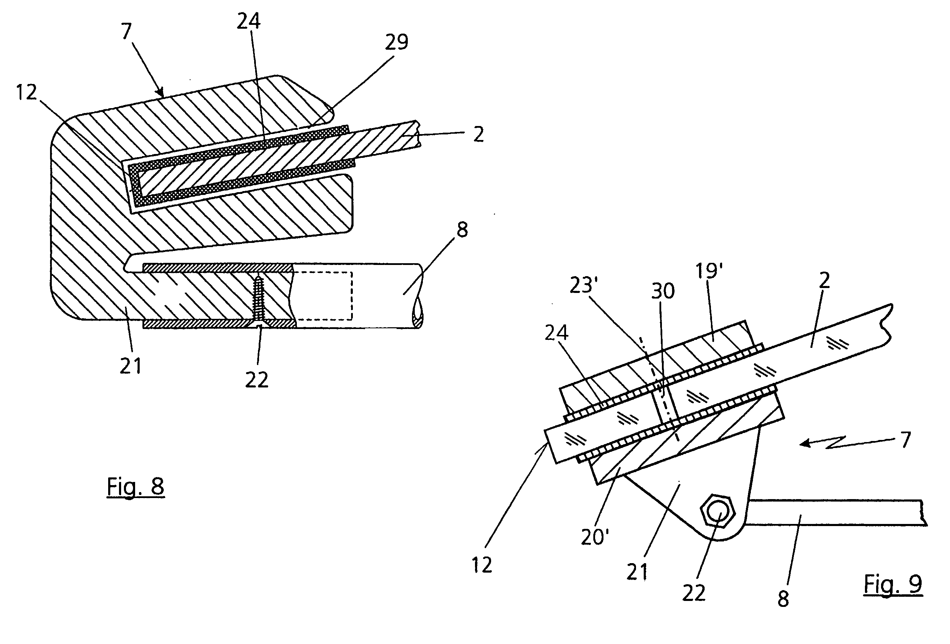

In Fig. 8 ist nun eine alternative Ausführungsform des Befestigungselements 7 erkennbar, bei der das Befestigungselement 7 einstückig ausgeführt ist und wobei die Scheibe 2 hier in eine Nut 29 des Befestigungselements 7 seitlich eingeschoben wird. Die Befestigung des Zugmittels 8 erfolgt auch hier mittels eines Befestigungsmittels 22 an einem hier als Arm des Befestigungselements 7 ausgeführten Halteelements 21.

Eine weitere Ausführungsform eines Befestigungselements 7 ist auch in Fig. 9 dargestellt. Auch hier besteht das Befestigungselement 7 aus zwei Backen 19', 20', deren Aufbau und Funktionsweise prinzipiell dem des Klemmelements gemäß Fig. 6 und Fig. 7 entspricht. Lediglich ist hier der untere Backen 20' nicht L-förmig ausgebildet, so daß die Scheibe 2 an ihrer Seitenkante 12 kein Widerlager in dem Befestigungselement 7 findet. Dafür ist das wenigstens eine Befestigungsmittel 23', welches die Backen 19' und 20' miteinander verbindet, durch eine Öffnung, hier eine Bohrung 30, in der Scheibe 2 hindurchgeführt. Der weitere Aufbau mit der Zwischenschicht 24 und der Befestigung des Zugmittels 8 an dem Halteelement 21 entspricht wiederum dem gemäß Fig. 6. Auch hier wäre es prinzipiell denkbar, eine Aufnahmeeinrichtung 26 in dem Halteelement 21 bzw. dem Befestigungselement 7 anzubringen. Da die Befestigung der Baueinheit 1 jedoch auch über das Zugmittel 8, insbesondere wenn dies als Rohr oder Stange ausgebildet ist, erfolgen kann, wurde in Fig. 9 bewußt auf eine Darstellung einer Aufnahmeeinrichtung 26 verzichtet.

Neben den anhand der Zeichnung beschriebenen Ausführungsbeispielen zugrunde liegenden rechteckigen Form der Scheibe 2' sind prinzipiell auch andere Formen denkbar. Insbesondere könnte sich eine dreieckige Form der Scheibe eignen, welche in ihrem oberen, der Spitze zugewandten Bereich über ein Befestigungsmittel gemäß dem Ausführungsbeispiel in Fig. 9 geklemmt wird, und welche im Bereich der Basis des Dreiecks über zwei Befestigungsmittel gemäß Fig. 6 geklemmt wird. Dabei würden zwei der Zugmittel 8 an dem im Bereich der Spitze angeordneten Befestigungsmittel 7 angreifen und zu jeweils einem der im Bereich der Basis angeordneten Befestigungsmittel 7 verlaufen. Über eine derartige Konstruktion eines Zugankers 3 lassen sich dann Baueinheiten 1 aus gebogenen, in ihrer Projektionsfläche dreieckigen Gläsern herstellen, welche sich zum Aufbau von Kuppelelementen oder dergleichen anbieten würden.

Auch weitere Ausführungsformen der Scheiben, beispielsweise mit ovalen oder an ihren Kanten gerundeten Projektionsflächen, sind beim Einsatz entsprechender Zuganker durchaus denkbar.

Die Baueinheit 1 bildet dann immer eine bei Herstellung in einer Fabrik vorgefertigte Einheit, welche dann vor Ort, beispielsweise auf einer Baustelle oder dergleichen, lediglich auf einer vor allem an sich bekannten Unterkonstruktion montiert werden muß. Aufgrund der leichten, stabilen und optisch sehr unauffälligen Ausführung der Zuganker, die so angeordnet sind, daß eine prinzipmäßig nicht vermeidbare Durchbiegung der Seitenkante 12 der Scheibe 2 im Bereich der für derartige Konstruktionen üblichen Toleranzen unerheblich ist, sind die Elemente leicht, schön, stabil und einfach zu montieren.

Beim Aufbau von großflächigen Überdachungen sind lediglich im Bereich der Seitenkanten 12 Querträger geplant worden, welche beispielsweise eine Ablaufrinne für Regenwasser oder dergleichen aufweisen und auf welchen zusammenstellbare Bänder gemäß Fig. 4 zu liegen kommen. Damit läßt sich praktisch jede vorstellbare Größe eines Platzes, Stadions oder dergleichen mit den Baueinheiten 1 überdachen.

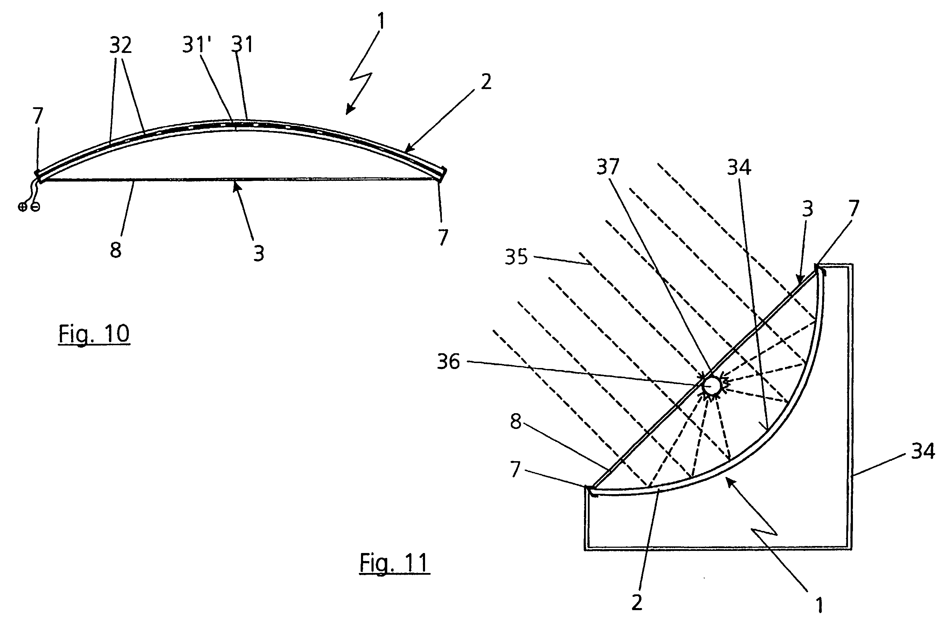

Fig. 10 zeigt eine weitere Ausführung der Baueinheit 1, wobei die Scheibe 2 der Baueinheit 1 wenigstens zwei Glasschichten 31, 31' aufweist. Zwischen den beiden Glasschichten 31, 31', diese können dabei jeweils auch als Sicherheitsverbundglas wiederum mehrschichtig ausgeführt sein, sind Solarzellen 32 angeordnet. Die Baueinheit 1 bildet damit ein in sich gebogenes Photovoltaik(PV)-Modul. Dieses PV-Modul ist dann in der Lage, den unter ihm liegenden Bereich zu beschatten und gleichzeitig elektrische Energie zu liefern. Durch die gebogene Form lassen sich so auch Fassadenverkleidungen mit günstigem Wirkungsgrad realisieren, wobei es sinnvoll sein kann, dann nur in einen Teil der jeweiligen Baueinheit Solarzellen einzulegen, welche ansonsten aufgrund der senkrecht stehenden Fläche einen sehr schlechten Wirkungsgrad liefern würden.

Prinzipiell lassen sich dafür kleinflächige Solarzellen 32 aus polykristallinem oder monokristallinem Silizium einsetzen. Besonders günstig ist jedoch der Einsatz von Solarzellen 32 aus amorphem Silizium, welches durch eine Beschichtung auf eine der Glasschichten 31, 31' aufgebracht ist. Diese sogenannten Dünnschichtzellen lassen sich dabei sehr günstig an die jeweiligen Erfordernisse anpassen und können beispielsweise auch in ihrer Transparenz variiert werden, so daß ein teiltransparentes gebogenes PV-Modul denkbar ist.

Ein weiterer Anwendungsbereich liegt im Einsatz der Baueinheiten in der solarthermischen Energietechnik, wie dies in Fig. 11 prinzipmäßig angedeutet ist. Dabei ist eine Baueinheit 1 erkennbar, bei der eine Innenfläche 33 der Scheibe 2 reflektierend ausgebildet ist. Wird die Baueinheit 1 nun, beispielsweise in der hier prinzipmäßig dargestellten Art, auf eine entsprechende Unterkonstruktion 34 aufgebaut, so kann einfallendes Sonnenlicht 35 von der reflektierend ausgebildeten Fläche 33 in der Art reflektiert werden, daß sich der Energieinhalt des Sonnenlichts in einem im Querschnitt punktförmigen Bereich, einem Brennpunkt 36, sammelt. Ist nun in diesem Brennpunkt 36, dessen Lage durch die Biegung der Scheibe 2 bei der Herstellung beeinflußbar ist, ein Rohr 37 angeordnet, so kann die dem Rohr 37 entstehende thermische Energie durch ein in dem Rohr 37 strömendes Wärmeträgermedium, beispielsweise ein Thermoöl, abgeführt und für energietechnische Anwendungen genutzt werden.

Diese Art der solarthermischen Kraftwerke ist dabei grundlegend bekannt, kann jedoch durch die Baueinheiten 1 aus der Scheibe 2 und dem Zuganker 3 bezüglich der Kosten der Montage und des Aufwands erheblich vereinfacht werden.

Das Rohr 37 kann dabei je nach eingestellter Biegung der Scheibe 2 der vorgefertigten Baueinheit 1 einfach an dem Zugmittel 8 des Zugankers 3, beispielsweise durch Rohrschellen (nicht dargestellt), befestigt werden. Durch eine Aneinanderreihung von mehreren derartig ausgebildeten Baueinheiten 1 zu einem endlosen Band 16, analog zu der in Fig. 4 dargestellten Überdachung, können so sehr einfach großflächige Anlagen realisiert werden. Selbstverständlich sind dabei an sich bekannte Maßnahmen zur Nachführung der Baueinheiten 1 je nach Stand der Sonne denkbar.

## Patentansprüche

1. Vorgefertigte Baueinheit einer gebogenen Verglasung für Überkopfverglasungen, Dekoration, Schallschutz, energietechnische Anwendungen oder dergleichen, mit einer mechanisch gebogenen Scheibe (2) aus Flachglas (2') und wenigstens einem Zuganker (3), wobei die Scheibe (2) durch wenigstens zwei Befestigungselemente (7) und wenigstens ein Zugmittel (8) des Zugankers (3) in Bogenform fixiert ist.

2. Baueinheit nach Anspruch 1,
**dadurch gekennzeichnet, dass**
die Scheibe (2,2') aus wenigstens einem Einscheibensicherheitsglas (ESG) oder wenigstens einem teilvorgespannten Sicherheitsglas (TVG) besteht.

3. Baueinheit nach Anspruch 1 oder 2,
**dadurch gekennzeichnet, dass**
die Scheibe (2,2') vollflächig mit wenigstens einer Splitterschutzfolie versehen ist.

4. Baueinheit nach Anspruch 1, 2 oder 3,
**dadurch gekennzeichnet, dass**
die Scheibe (2,2') aus Verbundsicherheitsglas (VSG) gebildet ist, bestehend aus wenigstens zwei Einscheibensicherheitsgläsern (ESG) oder wenigstens zwei teilvorgespannten Sicherheitsgläsern (TVG).

5. Baueinheit nach Anspruch 1,
**dadurch gekennzeichnet, dass**
die Befestigungselemente (7) im Bereich von Seitenkanten (12) der Scheibe (2,2') angebracht sind.

6. Baueinheit nach Anspruch 5,
**dadurch gekennzeichnet, dass**
zwischen den Befestigungselementen (7) und der Scheibe (2,2') eine Zwischenschicht (24) angeordnet ist, deren Material eine kleinere Härte als das Material der Befestigungselemente (7) aufweist.

7. Baueinheit nach Anspruch 5 oder 6,
**dadurch gekennzeichnet, dass**
die Befestigungselemente (7) an den Seitenkanten (12) der Scheibe (2,2') formschlüssig angreifen.

8. Baueinheit nach einem der Ansprüche 1 bis 7,
**dadurch gekennzeichnet, dass**
die Befestigungselemente (7) als Klemmelemente ausgebildet sind, wobei die Klemmelemente (7) aus wenigstens zwei über Befestigungsmittel (23,23') miteinander verbindbaren Teilen (19,20;19',20') bestehen.

9. Baueinheit nach Anspruch 8,
**dadurch gekennzeichnet, dass**
die Klemmelemente (7) an den der Seitenkanten (12) der Scheibe (2,2') klemmend befestigbar sind.

10. Baueinheit nach Anspruch 8,
**dadurch gekennzeichnet, dass**
die Scheibe (2,2') im Bereich der Klemmelemente (7) wenigstens eine Öffnung (Bohrung 30) aufweist,
wobei die Befestigungsmittel (23') für die Teile (19',20') der Klemmelemente (7) zumindest teilweise in der Öffnung (Bohrung 30) angeordnet sind.

11. Baueinheit nach einem der Ansprüche 1 bis 10,
**dadurch gekennzeichnet, dass**
die Scheibe (2, 2' ) aus wenigstens zwei Glasschichten (31,31') besteht, wobei zwischen den Glasschichten (31,31') photovoltaische Elemente (32) angeordnet sind.

12. Baueinheit nach einem der Ansprüche 1 bis 11,
**dadurch gekennzeichnet, dass**
die dem wenigstens einen Zuganker (3) zugewandte Seite der Scheibe (2,2') reflektierend ausgebildet ist.

13. Baueinheit nach einem der Ansprüche 1 bis 12,
**dadurch gekennzeichnet, dass**
die Zuganker (3) Aufnahmeeinrichtungen (26) zur Montage der Baueinheit (1) aufweisen, wobei die Aufnahmeeinrichtungen (26) an den Befestigungselementen (7) angeordnet sind.

14. Baueinheit nach einem der Ansprüche 5 bis 13,
**dadurch gekennzeichnet, dass**
das wenigstens eine Zugmittel (8) des Zugankers (3) als Rohr, Stange, Seil, Kette oder dergleichen ausgebildet ist.

## Claims

1. Prefabricated unit of curved glazing for overhead glazing installations, decoration, sound insulation, power engineering applications or the like, comprising a mechanically curved pane (2) of flat glass (2') and at least one tension rod (3), wherein the pane (2) is fixed in curved form by means of at least two fastening elements (7) and at least one tension means (8) of the tension rod (3).

2. Unit according to claim 1,
**characterized in that**
the pane (2, 2') comprises at least one layer of toughened safety glass (TSG) or at least one layer of partially prestressed safety glass (PPSG).

3. Unit according to claim 1 or 2,
**characterized in that**
the pane (2, 2') is provided over its entire surface with at least one shatterproof film.

4. Unit according to claim 1, 2 or 3,
**characterized in that**
the pane (2, 2') is formed from laminated safety glass (LSG), comprising at least two layers of toughened safety glass (TSG) or at least two layers of partially prestressed safety glass (PPSG).

5. Unit according to claim 1,
**characterized in that**
the fastening elements (7) are attached in the region of lateral edges (12) of the pane (2, 2').

6. Unit according to claim 5,
**characterized in that**
disposed between the fastening elements (7) and the pane (2, 2') is an intermediate layer (24), the material of which has a lower hardness than the material of the fastening elements (7).

7. Unit according to claim 5 or 6,
**characterized in that**
the fastening elements (7) act positively on the lateral edges (12) of the pane (2, 2').

8. Unit according to one of claims 1 to 7,
**characterized in that**
the fastening elements (7) take the form of clamping elements, wherein the clamping elements (7) comprise at least two parts (19, 20; 19', 20'), which are connectable to one another by fastening means (23, 23').

9. Unit according to claim 8,
**characterized in that**
the clamping elements (7) are fastenable in a clamping manner to the lateral edges (12) of the pane (2, 2').

10. Unit according to claim 8,
**characterized in that**
the pane (2, 2') has at least one opening (drill hole 30) in the region of the clamping elements (7), wherein the fastening means (23') for the parts (19', 20') of the clamping elements (7) are disposed at least partially in the opening (drill hole 30).

11. Unit according to one of claims 1 to 10,
**characterized in that**
the pane (2, 2') comprises at least two glass layers (31, 31'), wherein photovoltaic elements (32) are disposed between the glass layers (31, 31').

12. Unit according to one of claims 1 to 11,
**characterized in that**
the side of the pane (2, 2') facing the at least one tension rod (3) is of a reflective design.

13. Unit according to one of claims 1 to 12,
**characterized in that**
the tension rods (3) have receiving devices (26) for assembly of the unit (1), wherein the receiving devices (26) are disposed on the fastening elements (7).

14. Unit according to one of claims 5 to 13,
**characterized in that**
the at least one tension means (8) of the tension rod (3) takes the form of a tube, rod, rope, chain or the like.

## Revendications

1. Sous-ensemble préfabriqué d'une verrière courbée pour des verrières hautes pour la décoration, l'insonorisation, des applications énergétiques ou autres, avec une vitre (2) incurvée mécaniquement constituée de verre plat (2') et au moins un tirant d'ancrage (3), la vitre (2) étant fixée par au moins deux éléments de fixation (7) et au moins un moyen de traction (8) du tirant d'ancrage (3) ayant une forme arquée.

2. Sous-ensemble selon la revendication 1,
**caractérisé en ce que**
la vitre (2, 2') est constituée d'au moins un verre de sécurité trempé (ESG) ou d'au moins un verre de sécurité partiellement précontraint (TVG).

3. Sous-ensemble selon la revendication 1 ou 2,
**caractérisé en ce que**
la vitre (2, 2') est pourvue, sur toute sa surface, d'au moins un film de protection contre les éclats.

4. Sous-ensemble selon la revendication 1, 2 ou 3,
**caractérisé en ce que**
la vitre (2, 2') est constituée d'au moins un verre de sécurité composite (VSG), constitué lui-même d'au moins deux verres de sécurité trempés (ESG) ou d'au moins deux verres de sécurité partiellement précontraints (TVG).

5. Sous-ensemble selon la revendication 1,
**caractérisé en ce que**
les éléments de fixation (7) sont disposés au niveau des arêtes latérales (12) de la vitre (2, 2').

6. Sous-ensemble selon la revendication 5,
**caractérisé en ce que**,
entre les éléments de fixation (7) et la vitre (2, 2'), se trouve une couche intermédiaire (24) dont le matériau présente une dureté inférieure à celle du matériau des éléments de fixation (7).

7. Sous-ensemble selon la revendication 5 ou 6,
**caractérisé en ce que**
les éléments de fixation (7) s'emboîtent sur les arêtes latérales (12) de la vitre (2,2') avec une complémentarité de forme.

8. Sous-ensemble selon l'une des revendications 1 à 7,
**caractérisé en ce que**
les éléments de fixation (7) sont conçus comme des éléments de serrage, les éléments de serrage (7) étant constitués d'au moins deux parties (19,20; 19', 20') pouvant être reliées entre elles à l'aide de moyens de fixation (23, 23').

9. Sous-ensemble selon la revendication 8,
**caractérisé en ce que**
les éléments de serrage (7) peuvent être fixés sur les arêtes latérales (12) de la vitre (2, 2') avec un serrage.

10. Sous-ensemble selon la revendication 8,
**caractérisé en ce que**
la vitre (2, 2') comporte, au niveau des éléments de serrage (7), au moins une ouverture (alésage 30), les éléments de fixation (23') pour les parties (19', 20') des éléments de serrage (7) étant disposés au moins partiellement dans l'ouverture (alésage 30).

11. Sous-ensemble selon l'une des revendications 1 à 10,
**caractérisé en ce que**
la vitre (2, 2') est constituée d'au moins deux couches de verre (31, 31'), des éléments photovoltaïques (32) étant disposés entre les couches de verre (31, 31').

12. Sous-ensemble selon l'une des revendications 1 à 11,
**caractérisé en ce que**
le côté du tirant d'ancrage (3) orienté vers la vitre (2, 2') est réfléchissant.

13. Sous-ensemble selon l'une des revendications 1 à 12,
**caractérisé en ce que**
le tirant d'ancrage (3) comprend des dispositifs de logement (26) pour le montage du sous-ensemble (1), les dispositifs de logement (26) étant disposés sur les éléments de fixation (7).

14. Sous-ensemble selon l'une des revendications 5 à 13,
**caractérisé en ce que**
le moyen de traction (8) du tirant d'ancrage (3) est conçu comme un tube, une tige, un câble, une chaîne ou autre.
